# EUROPEAN PATENT APPLICATION

(11) **EP 4 592 023 A2**
(43) Date of publication of application: **30.07.2025**
(21) Application number: 25152948.3
(22) Date of filing: 20.01.2025
(51) Int. Cl.: B23P 6/00, B23K 26/342, F01D 5/00

(54) **ADDITIVE MANUFACTURING REMOVAL AND REPLACEMENT OF FEATURE TO ENABLE ACCESS DURING DIRECTED ENERGY DEPOSITION REPAIR PROCESS**

(30) Priority: 26.01.2024 US 202418424230
(71) Applicant: RTX Corporation, Farmington, CT 06032 (US)
(72) Inventor: BREITZMANN, Peter, Farmington, 06032 (US)
(74) Representative: Dehns

(57) **Abstract**

An aerospace part (10), which is made from a base material, repairing using directed energy deposition (DED) techniques. The aerospace part (10) is inspected to identify a worn or defective repair region (24) on a repair feature (14) that requires repair. An intervening feature (12) that blocks line-of-sight from a DED laser/powder head (18) to the repair region (24) on the repair feature (14) is removed such that after removal of the intervening feature (12) there is line-of-sight from the DED laser/powder head (18) to the repair region (24) on the repair feature (14). a repair procedure is performed on the repair region (24) of the repair feature (14) using the DED laser/powder head (18). A replacement intervening feature (12) is obtained and attached to the aerospace part (10) to complete a desired repair. The aerospace part (10) is returned to service after completion of the desired repair.

## Description

The present disclosure relates generally to repair of components and, more particularly, to an approach for removing a feature to enable access to a repair site.

It is often desirable to repair components used in a variety of applications, include aircraft propulsion applications, after they have suffered operations-related wear or damage due to use in the environments for which they were intended. While a variety of repair techniques are available, not all such components can be repaired using currently known techniques.

### SUMMARY

One aspect of this disclosure is directed to a method of repairing an aerospace part, which is made from a base material. The aerospace part is inspected to identify a worn or defective repair region on a repair feature that requires repair. An intervening feature that blocks line-of-sight from a directed energy deposition (DED) laser/powder head to the repair region on the repair feature is removed such that after removal of the intervening feature there is line-of-sight from the DED laser/powder head to the repair region on the repair feature. a repair procedure is performed on the repair region of the repair feature using the DED laser/powder head. A replacement intervening feature is obtained and attached to the aerospace part to complete a desired repair. The aerospace part is returned to service after completion of the desired repair.

### BRIEF DESCRIPTION OF THE DRAWINGS

Fig. 1 is a first schematic representation of an aerospace part that includes a feature that requires repair using directed energy deposition (DED) techniques.
Fig. 2 is a second schematic representation of an aerospace part that includes a feature that requires repair using directed energy deposition (DED) techniques.
Fig. 3 is a flowchart of the repair process of the present disclosure.

### DETAILED DESCRIPTION

While a wide variant of repair techniques are available for aerospace components that have suffered operations-related wear or damage due to use in the environments for which they were intended, not all components can be repaired using currently known techniques. For example, repair of aerospace components, such as gas turbine engine components, using directed energy deposition (DED) techniques requires line-of-site access to a site or feature in need of repair but line-of-site is not always available due to intervening features that block the line-of-site.

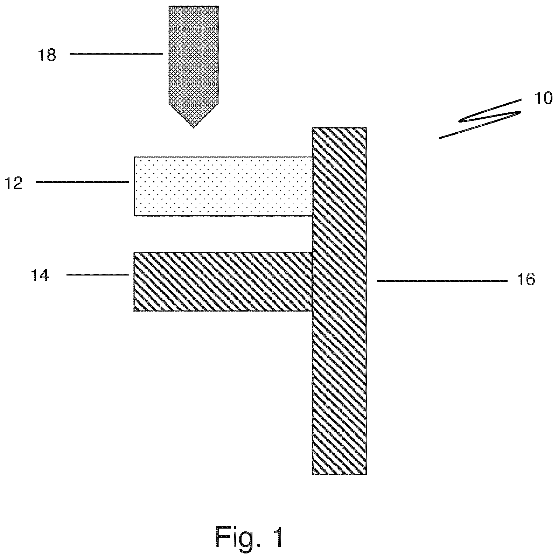

Fig. 1 is a schematic of an aerospace part **10** that includes a feature **14** that requires repair due to operational wear or damage. In this example, repair feature **14** is a candidate for repair using DED techniques (e.g., using DED laser/powder head **18),** but line-of-sight from DED laser/powder head **18** is blocked by intervening feature **12.** Fig. 1 depicts the aerospace part **10** and associated intervening feature **12** and repair feature **14** in generic form to emphasize the broad applicability of the disclosed repair method. The aerospace part **10,** intervening feature **12,** and repair feature **14** may be made from a base material as discussed further below. A person of ordinary skill well recognize parts that are candidates for repair using the disclosed repair method.

Line-of-sight from the DED laser/powder head **18** to the repair feature **14** can be provided by removing the intervening feature **12.** Removal of the intervening feature **12** can be accomplished using any appropriate technique including mechanical cutting with a saw or abrasive material, wire electro-discharge machining (EDM) techniques, laser cutting, or other appropriate removal techniques.

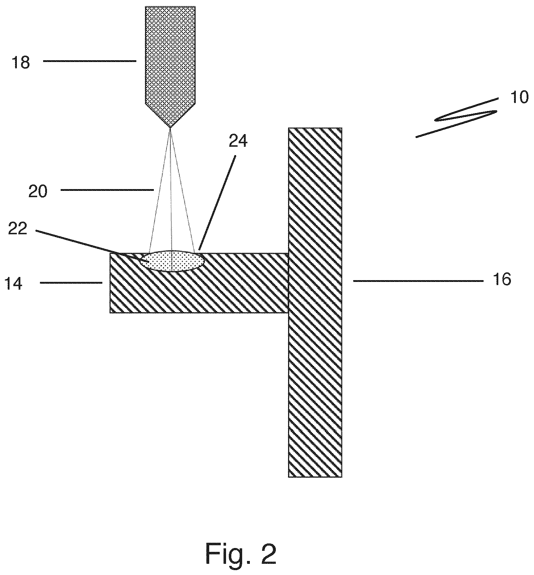

Fig. 2 shows is another schematic of aerospace part **10** with the intervening feature **12** (see Fig. 1) removed to provide line-of-site from the DED laser/powder head **18** to a repair region **24** of the repair feature **14.** With the intervening feature **12** removed, repair region **24** of the repair feature **14** can be repaired by providing DED material powder and laser energy, shown collectively as item **20** in Fig. 2, from the DED laser/powder head **18** is to the repair region **24** of the repair feature **14** to accomplish the desired repair. A person of ordinary skill will know how to select the DED material powder and amount of energy produced by the DED laser/powder head **18** to raise the DED material powder to a temperature sufficient to form the melt pool **22** in the repair region **24.** For example, the DED powder material may have the same composition as the base material or a different composition than the base material.

Also, a person of ordinary skill will know how to select the desired repair to address operational wear or damage to the repair feature **14.** Examples of suitable repairs include (i) filling cracks in the repair region of the repair feature using a DED powder material distributed by the DED laser/powder head and consolidating the DED powder material using laser energy from the DED laser/powder head and (ii) reestablishing a worn surface contour in the repair region of the repair feature using a DED powder material distributed by the DED laser/powder head and consolidating the DED powder material using laser energy from the DED laser/powder head. In addition, a person of ordinary skill will know how to control the DED laser/powder head **18** to raster or scan over the DED material powder to form the melt pool **22** across the length and width of a repair region **24** of the repair feature **14** and to consolidate the melt pool **22** to accomplish the desired repair.

Once the desired repair to the repair feature **14** is accomplished, intervening feature **12** must be reestablished on aerospace part **10** before aerospace part **10** can be returned to service. Intervening feature **12** can be reestablished on aerospace part **10** using a variety of methods. For example, if Intervening feature **12** was removed from aerospace part **10** (as described above) substantially intact and is intervening feature **12** is otherwise in serviceable condition, intervening feature **12** can be reattached to aerospace part **10** using known techniques that are consistent with the operating requirements of the aerospace part **10,** such as brazing, welding, or DED joining techniques that use the DED laser/powder head **18.** If the original intervening feature **12** is not in serviceable condition, the intervening feature **12** can be reestablished using a replacement part that could be taken, for example, from an inventory of spare, replacement parts or can be fabricated as a new replacement part. In the latter situation, the replacement intervening feature **12** can be made using any available techniques including additive manufacturing (AM) techniques, including but not limited to powder bed fusion (PBF) techniques such a powder bed fusion-laser (PBF-L) or powder bed fusion-electron beam (PBF-EB) or even DED techniques. One advantage of making the replacement intervening feature **12** with PBF techniques is that the replacement intervening feature **12** can be made to near net shape such that the replacement material may, at most, require only limited machining before use. If DED techniques would be suitable for fabricating the replacement intervening feature **12,** the DED laser/powder head **18** (see Figs. 1 and 2) can be used to fabricate the replacement intervening feature **12** either separately for later attachment or in situ for direct attachment onto the aerospace part **10.** Once the replacement intervening feature **12** has been attached to the aerospace part **10** by whatever method is selected, the aerospace part is a candidate for return to service.

A person of ordinary skill will recognize that the materials used for the repair to repair feature 14 and fabrication of replacement intervening feature **12** any of the materials typically used for the applications for which the aerospace part **10** is intended. For example, if the aerospace part **10** is used in a gas turbine application, the base material used to make the aerospace part **10** can be a titanium material for cold section (e.g., compressor) applications (see Table 1 for nonlimiting examples), a superalloy material for hot section (e.g., combustor and turbine) and disk applications (See Table 2 for nonlimiting examples), or specialty steels for other applications (e.g., shafts) (See Table 3 for nonlimiting examples). In most applications, the replacement intervening feature **12** will be made from the same base material as the aerospace part **10,** most likely in a powder form that is useable with an AM technique used to make the replacement intervening feature **12.** A person of ordinary skill will recognize that other materials can be used as the base material for the parts and method of this disclosure.

**Table 1: Selected Titanium Alloys**

| **Grade designation** | **Nominal chemical composition** |
|---|---|
| Ti64 | Ti-6Al-4V |
| Ti811 | Ti-8Al-1Mo-1V |
| Ti1100 | Ti-6Al-2.8Sn-4Zr-0.4Mo-0.4Si |
| Ti6242 | Ti-6Al-2Sn-4Zr-2Mo |
| Ti6242S | Ti-6Al-2Sn-4Zr-2Mo-0.2Si |

**Table 2: Selected Superalloys**

| **Grade designation** | **Nominal chemical composition** |
|---|---|
| Hastelloy X | Ni22Cr1.5Co1.9Fe0.7W9Mo0.07C0.005B |
| IN 100 | 60Ni10Cr15Co3Mo4.7Ti5.5A10.15C 0.015B0.06Zr1.0V |
| IN 625 | 58.8Ni21.5Cr9Mo5Fe3.65Ni0.5Al0.5Ti0.05C0.5Mn0.5Si0.015S0.015P |
| IN 713 | 74.2Ni12.5Cr4.2Mo2Nb0.8T16.1Al0.1Zr0.12C0.01B |
| IN 718 | 53Ni19Cr18.5Fe3Mo0.9Ti0.5Al5.1Cb 0.03C |
| IN 738 | 61.5Ni16Cr8.5Co1.75Mo2.6W1.75Ta0.9Nb3.4Ti3.4Al0.04Zr0.11C0.01B |
| IN 792 | 60.8Ni12.7Cr9Co2Mo3.9W3.9Ta4.2Ti3.2Al0.1Zr0.21C0.02B |
| Rene 41 | 56Ni19Cr10.5Co9.5Mo3.2Ti1.7Al0.01Zr0.08C0.005B |
| Rene 77 | 53.5Ni15Cr18.5Co5.2Mo3.5Ti4.25Al0.08C0.015B |
| Rene 80 | 60.3Ni14Cr9.5Co4Mo4W5Ti3al0.03Zr0.17C0.015B |
| Rene 80+Hf | 59.8Ni14Cr9.5Co4Mo4W0.8Hf4.7Ti3Al0.01Zr0.15C0.015B |
| Rene88 DT | 56.4Ni16cr13Co4Mo4W0.7Nb3.7Ti 2.1Al0.03C0.015B0.03Zr |
| Rene 95 | 61Ni14Cr8Co3.5Mo3.5W3.5Nb2.5Ti3.5Al 0.16C0.01B0.05Zr |
| Rene 100 | 62.6Ni9.5Cr15Co3Mo4.2Ti5.5Al0.06Zr0.15C0.015B |
| MERL-76 | 54.4Ni12.4Cr18.6co3.3Mo1.4Nb4.3Ti5.1Al0.02C0.03B0.35Hf0.06Zr |
| Udimet 720 | 55Ni18Cr14.8Co3Mo1.25W5Ti2.5Al0.035C0.033B0.03Zr |
| Udimet 720LI | 57Ni16Cr15Co3Mo1.25W5Ti2.5Al0.025C0.018B0.03Zr |
| MAR-M200 | 59.5Ni9Cr10Co12.5W1.8Nb2Ti5Al0.05Zr0.15C0.015B |
| MAR-M200+Hf | Ni8Cr9Co12W2Hf1Nb1.9Ti5.0Al0.03Zr0.13C0.015B |
| MAR-M246 | 59.8Ni9Cr10Co2.5Mo10W1.5Ta1.5Ti5.5Al0.05Zr0.14C0.015B |
| MAR-M246+Hf | Ni9Cr10Co2.5Mo10W1.5Hf1.5Ta1.5Ti5.5Al0.05Zr0.15C0.015B |
| Udimet 700 | 59Ni14.3Cr114.5Co4.3Mo3.5Ti4.3Al0.02Zr0.08C0.015B |
| Udimet 710 | 54.8Ni18Cr15Co3Mo1.5W2.5Ti5Al0.08Zr0.13C |
| Waspaloy | 58Ni19Cr13Co4Mo3Ti1.4Al |

**Table 3: Selected Specialty Steels**

| **Grade designation** | **Nominal chemical composition** |
|---|---|
| CrMoV steel | Fe1Cr0.5Ni1.25Mo0.25V0.30C |
| M152 | Fe12Cr2.5Ni1.7Mo0.3V0.12C |

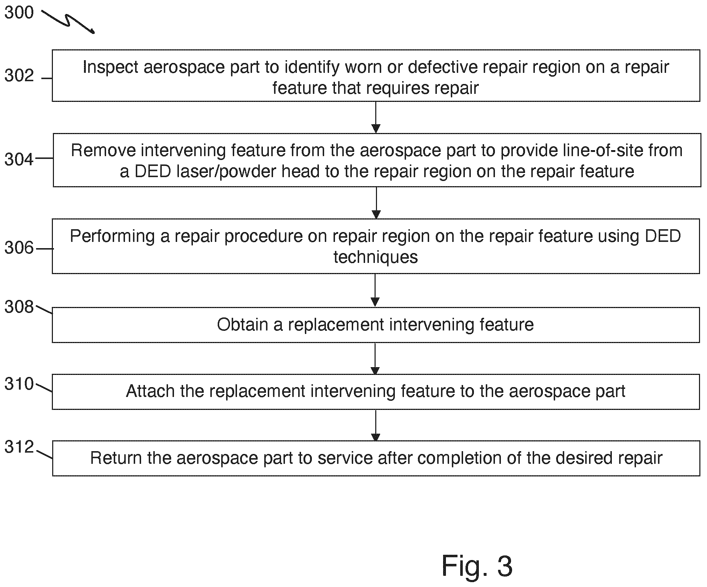

Fig. 3 is a flowchart of the overall repair procedure **300** of this disclosure. At step **302,** the aerospace part **10** is inspected to identify a worn or defective region on the repair feature **14** that requires a repair. At step **304,** an intervening feature **12** is removed from the aerospace part **10** to provide line-of-site from a DED laser/powder head **18** to the repair region **24** of the repair feature **14** as discussed above, worn or defective features that need to be replaced are removed from the original part. At step **306,** the repair region **24** on the repair feature 14 is repaired using DED techniques. At step **308,** a replacement intervening feature **12** is obtained as discussed above, for example by using the original intervening feature **12,** by using a part from an inventory of replacement parts, or by fabricating a replacement intervening feature **12.** As discussed above the replacement intervening feature **12** can be fabricated using AM techniques, including but not limited to PBF techniques and DED techniques. At step 310, the replacement intervening feature **12** is attached to the aerospace part **10.** Finally, at step **312** the aerospace part **10** is returned to service after completion of the desired repair. A person of ordinary skill will know how to perform each of these steps based upon the present disclosure and knowledge of manufacturing processes.

Using the repair technique described in this disclosure, DED techniques can be used to repair aerospace parts **10** that would not otherwise be eligible for DED repairs due to line-of-site from a DED laser/powder head **18** being blocked by an intervening feature **12.** As a result, the number of available repair methods for aerospace parts **10** is expanded.

### Discussion of Possible Embodiments

The following are non-exclusive descriptions of possible embodiments of the present invention.

A method of repairing an aerospace part incudes inspecting the aerospace part, which is made from a base material, to identify a worn or defective repair region on a repair feature that requires repair. An intervening feature that blocks line-of-sight from a directed energy deposition (DED) laser/powder head to the repair region on the repair feature is removed from the aerospace part such that after removal of the intervening feature there is line-of-sight from the DED laser/powder head to the repair region on the repair feature. A repair procedure is performed on the repair region of the repair feature using the DED laser/powder head. A replacement intervening feature is obtained and attached to the aerospace part to complete a desired repair. The aerospace part is returned to service after completion of the desired repair.

The method of the preceding paragraph can optionally include any one or more of the following features, configurations and/or additional elements:
The method of the preceding paragraph, wherein the base material comprises a titanium alloy, a superalloy material, or a specialty steel alloy.

The method of the any of the preceding paragraphs, wherein the repair procedure includes filling cracks in the repair region of the repair feature using a DED powder material distributed by the DED laser/powder head and consolidating the DED powder material using laser energy from the DED laser/powder head.

The method of the preceding paragraph, wherein the DED powder material has the same composition as the base material.

The method of the preceding paragraph, wherein the DED powder material has a different composition as the base material.

The method of the any of the preceding paragraphs, wherein the repair procedure includes reestablishing a worn surface contour in the repair region of the repair feature using a DED powder material distributed by the DED laser/powder head and consolidating the DED powder material using laser energy from the DED laser/powder head.

The method of the preceding paragraph, wherein the DED powder material has the same composition as the base material.

The method of the preceding paragraph, wherein the DED powder material has a different composition as the base material.

The method of the any of the preceding paragraphs, wherein the replacement intervening part is the original intervening part, a replacement intervening part obtained from an inventory of replacement parts, or a newly fabricated replacement part.

The method of the preceding paragraph, wherein the replacement intervening part is a newly fabricated part made with additive manufacturing (AM) techniques.

The method of the preceding paragraph, wherein the AM techniques include powder bed fusion (PBF) techniques or DED techniques.

The method of the preceding paragraph, wherein the replacement intervening part is made from the base material.

The method of the preceding paragraph, wherein the replacement intervening part is made from a different material then the base material.

The method of the preceding paragraph, wherein the replacement intervening part is fabricated in situ on the aerospace part using DED techniques.

The method of the preceding paragraph, wherein the replacement intervening part is attached to the aerospace part using DED joining techniques.

The method of the any of the preceding paragraphs, wherein the aerospace part is a component of a gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of repairing an aerospace part (10), comprising:
inspecting the aerospace part (10) to identify a worn or defective repair region (24) on a repair feature (14) that requires repair, wherein the aerospace part (10) is made from a base material;
removing from the aerospace part (10) an intervening feature (12) that block line-of-sight from a directed energy deposition (DED) laser/powder head (18) to the repair region (24) on the repair feature (14), wherein after removal of the intervening feature (12) there is line-of-sight from the DED laser/powder head (18) to the repair region (24) on the repair feature (14);
performing, using the DED laser/powder head (18), a repair procedure on the repair region (24) of the repair feature (14);
obtaining a replacement intervening feature;
attaching the replacement intervening feature to the aerospace part (10) to complete a desired repair;
returning the aerospace part (10) to service after completion of the desired repair.

2. The method of claim 1, wherein the base material comprises a titanium alloy, a superalloy material, or a specialty steel alloy.

3. The method of claim 1 or 2, wherein the repair procedure includes filling cracks in the repair region (24) of the repair feature (14) using a DED powder material distributed by the DED laser/powder head (18) and consolidating the DED powder material using laser energy from the DED laser/powder head (18).

4. The method of claim 1, 2 or 3, wherein the repair procedure includes reestablishing a worn surface contour in the repair region (24) of the repair feature (14) using a DED powder material distributed by the DED laser/powder head (18) and consolidating the DED powder material using laser energy from the DED laser/powder head (18).

5. The method of any preceding claim, wherein the DED powder material has the same composition as the base material.

6. The method of any of claims 1 to 4, wherein the DED powder material has a different composition as the base material.

7. The method of any preceding claim, wherein the replacement intervening part is the original intervening part, a replacement intervening part obtained from an inventory of replacement parts, or a newly fabricated replacement part.

8. The method of claim 7, wherein the replacement intervening part is a newly fabricated part made with additive manufacturing (AM) techniques.

9. The method of claim 8, wherein the AM techniques include powder bed fusion (PBF) techniques or DED techniques.

10. The method of any preceding claim, wherein the replacement intervening part is made from the base material.

11. The method of any of claims 1 to 9, wherein the replacement intervening part is made from a different material then the base material.

12. The method of any preceding claim, wherein the replacement intervening part is fabricated in situ on the aerospace part (10) using DED techniques.

13. The method of any of claims 1 to 11, wherein the replacement intervening part is attached to the aerospace part (10) using DED joining techniques.

14. The method of any preceding claim, wherein the aerospace part (10) is a component of a gas turbine engine.
